# EUROPÄISCHE PATENTSCHRIFT

(11) **EP 0 728 554 B1**
(45) Veröffentlichungstag und Bekanntmachung des Hinweises auf die Patenterteilung: **15.11.2000**
(21) Anmeldenummer: 95102728.3
(22) Anmeldetag: 25.02.1995
(51) Int. Cl.: B23K 7/00

(54) **Gerät zum schnellsten Trennen von Stahl mit Sauerstoff in Stahlstranggiessanlagen**
Apparatus for quickly cutting of steel using oxygen in continuous steel casting plants
Appareil pour couper rapidement de l'acier avec de l'oxigène dans des installations de coulée continue d'acier

(43) Veröffentlichungstag der Anmeldung: 28.08.1996
(73) Patentinhaber: Horst K. Lotz Feuerschutzbaustoffe, D-65719 Hofheim-Wallau (DE)
(72) Erfinder: Lotz, Horst K., D-65719 Hofheim-Wallau (DE)

(56) Entgegenhaltungen:
- EP-A- 0 574 311
- CH-A- 442 939
- DE-A- 1 927 523
- DE-A- 2 215 538
- DE-A- 2 521 253
- DE-A- 4 105 558
- US-A- 4 173 499

## Beschreibung

Wenngleich die Geschwindigkeit des Brennschneidens in Stahlstranggießanlagen wegen der Anlagekosten durch die Länge des Schneidrollgangs und wegen der kürzesten Stücklängen, die man abtrennen wollte, immer schon möglichst hoch sein sollte, so sind durch die Entwicklung auch für schon betriebene Strahlstranggießanlagen durch höhere Gießgeschwindigkeiten wesentliche Produktionserhöhungen zur besseren Nutzung von Energie, Investitionskapital und Arbeitskraft mögich.

Einer der hemmenden Faktoren ist die Schneidgeschwindigkeit der der Gießanlage beigeordneten Strangtrenneinrichtung, die zu umständlichen und teuren Umbauten führen wird, wenn die Platzverhältnisse einen solchen Umbau überhaupt erlaubten.

Damit erhält die wohlbekannte Aufgabe, das Querteilen der Stränge schneller durchzuführen, eine neue, noch größere Bedeutung und erlaubt höhere Kosten in diesem Betriebsbereich.

Es ist bekannt, daß mit höherem Arbeitsdruck bei geeigneten Düsen energiehaltigere Trennstrahlen erzeugt und die Schneidgeschwindigkeit damit erhöht werden kann. Leider sind aus Sicherheits- und Wirtschaftlichkeitsgründen die Versorgungsnetze der Werke auf Werte zwischen 10 bis 25 bar Nenndruck beschränkt, andere Abnehmer verringern die wriklich verfügbaren Arbeitsdrücke noch weiter. Der Einsatz entsprechend großer Sauerstoffkompressoren im Arbeitsbereich von Strangtrennmaschinen wird nicht nur extrem teuer, sondern ist auch mit zusätzlichen unerwünschten Maßnahmen für die Rohrleitungs-, Schlauch-, und Gassteuersysteme verbunden.

Eine andere Denkrichtung versuchte, die Schneidgeschwindigkeit durch Mengenerhöhung mittels einer Reihe (mindestens 2) hintereinander liegender Schneidbohrungen, versorgt mit normalem Druck, zu bewirken. Die Schneidgeschwindigkeitszunahmen waren unbedeutend, Aufwand, Betriebsmittelverbrauch und Materialverlust durch größere Schneidfugen zu hoch.

Ein Gerät gemäß Oberegriff des Anspruchs 1 ist aus der DE-A-2521253 bekannt.

Die Aufgabe, das Schneiden zu beschleunigen, wurde mit vorstehenden Randbedingungen neu gestellt, mit besonderer Berücksichtigung des chemisch-physikalischen Schneidablaufs im Schnitt und einer besseren Strahlausbildung durch die Schneiddüse, die im wesentlichen den Schneidstrahl aus Sauerstoff mit verfügbarem Druck formt und auch das Schneiden mit Heizgas-Heizsauerstoff versorgter Heizflamme unterstützt bzw. möglich macht.

Diese Aufgabe wird erfindungsgemäß durch ein Gerät gemäß Anspruch 1 gelöst

Die Erfindung wird anhand der beigefügten Bilder erläutert. Im einzelnen zeigt
Bild 1 in einer Momentaufnahme in einem Werkstück einen normalen runden Schneidstrahl;
Bild 2 einen erfindungsgemäß gesuchten Schneidstrahl;
Bild 3 erfindungsgemäße Geschwindigkeitsprofile;
Bild 4 eine erfindungsgemäße Hochdruck-Injektor-Trenndüse und;
Bild 5 in einer Momentaufnahme in einem Werkstück einen erfindungsgemäßen Schneidstrahl

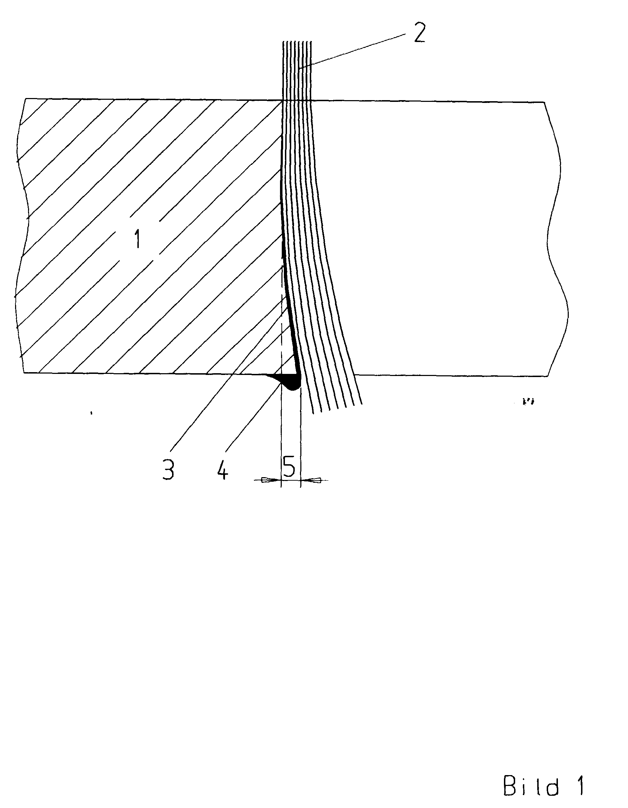

Eine genaue Betrachtung des Schneidablaufs in **Bild 1** zeigt in einer Momentaufnahme in einem Werkstück (1) einen normalen runden Schneidstrahl (2), der in das Material eindringt und mit seiner Vorderseite mit erhitztem Stahl reagiert und eine heiße, flüssige Schlackeschicht (3) aus Eisenoxid mit Eisen gemischt erzeugt, die mit der kinetischen Energie des Schneidstrahls (2) nach außen geblasen wird und damit frischer Sauerstoff an die schlackefreien Reaktionsflächenteile kommt. Da die Dicke der Schlackeschicht (3) aber zum Austritt hin zunimmt, die kinetische Energie, ähnlich wie in Bild (2) etwa gleichmäßig verteilt, des Schneidstrahls (2) dagegen etwa gleich bleibt oder durch Reibung abnimmt, kommt es, wie im Geschwindigkeitsprofil des Bildes (2) dargestellt, zu einer Verringerung der Reaktions- bzw. Schneidgeschwindigkeit nach außen (unten) hin. Das wird durch die Bildung eines sich ansetzenden Schneidbarts (4) aus dickflüssiger Schlacke noch verstärkt wird. Damit kommt es zu einem Riefennachlauf (5), der, wenn zu groß, das Schneiden durch unkontrollierte Strahlführung (Durchstecken, Rückwärtsblasen) unmöglich macht.

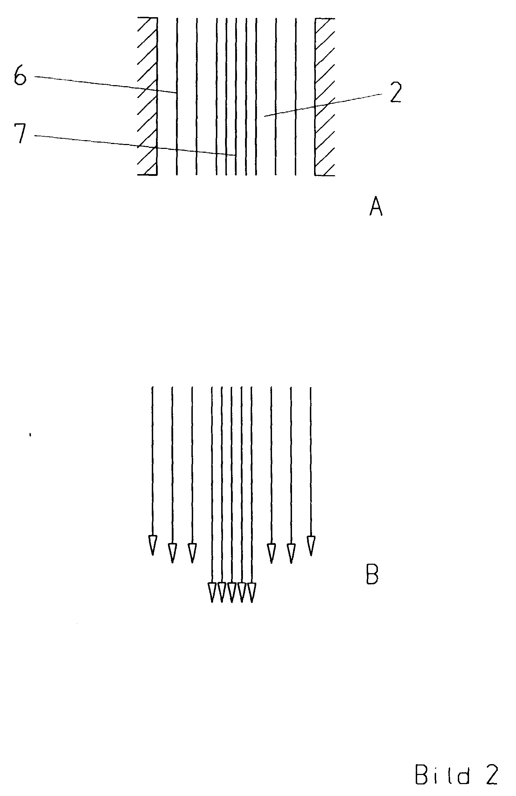

Erfindungsgemäß wird ein Schneidstrahl (2) ähnlich **Bild 2** gesucht, der einen Vorderbereich (6) für die erste Reaktion mit normal erzielbarer Strahlgeschwindigkeit hat, und einen Innen- oder Hinterbereich (7) mit hoher Strahlgeschwindigkeit, um die zunehmende Schlackeschicht (3) besser wegzublasen. Noch günstiger wäre ein Trennstrahl (2) mit von vorn nach hinten stark zunehmender Schneidgeschwindigkeit, wenngleich dies schwer zu erzeugen scheint.

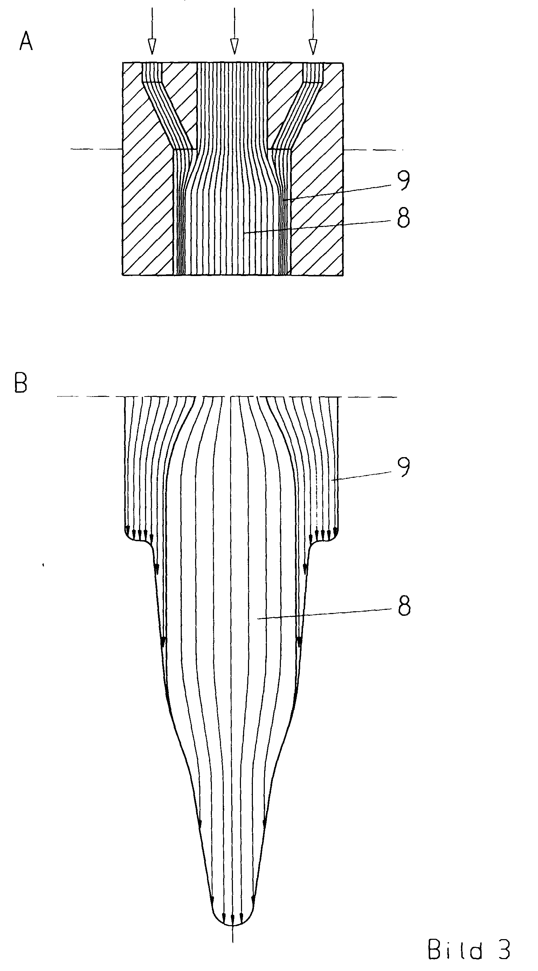

Durch die Erzeugung zweier konzentrisch angeordneter Strahlen, einem aufgeblähten Kernstrahl (8) und einem ihm umgebenden verengten Ringstrahl (9), kommt es zu einer Strahlenausbildung, ähnlich dem Geschwindigkeitsprofil **Bild 3**, insbesondere wenn zwischen einem aufgeblähten Kernstrahl (8) und dem verengtem Ringstrahl (9) von Anfang an keine störende Trennschicht gasförmig oder fest besteht. Dadurch wird nicht nur der verengte Ringstrahl (9) von dem schnelleren, energiereicheren Kernstrahl (8), der sich aufbläht, angetrieben, sondern der aufgeblähte Kernstrahl (8) wird durch seine Umgebung, nämlich dem beschleunigten Ringstrahl (9), weniger gebremst als durch eine andere Art von Umgebung.

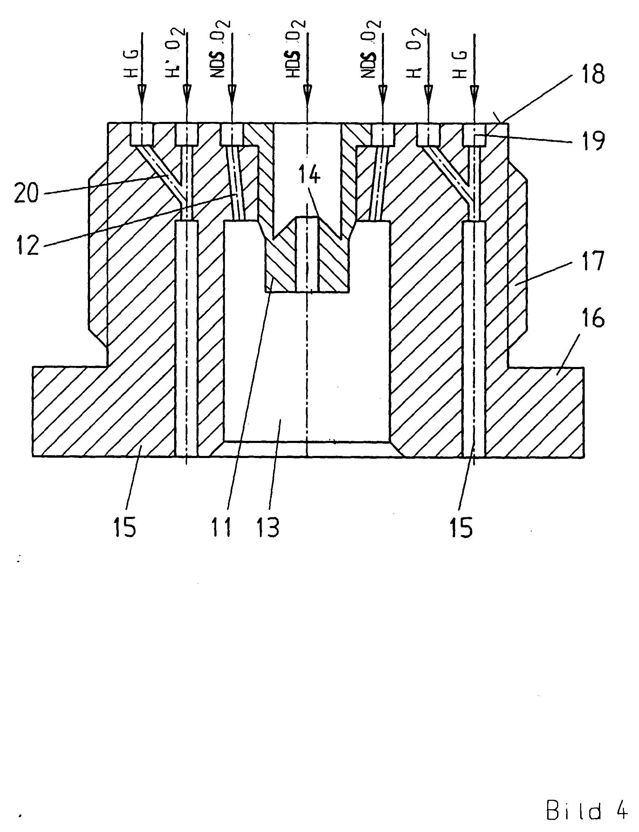

Damit ergibt sich auch die erfindungsgemäße Ausführung der Hochdruck-Injektor-Trenndüse (10) nach **Bild 4,** die außer der üblichen Heizung mittels den Dosierungsbohrungen (20), den Ringkanälen (19), den Heizbohrungen (15) und den Dichtflächen (18) für die Erzeugung der ringförmig angeordneten Heizflammen und dem Gewinde (17) sowie dem Sechskant (16) zum Einschrauben der Hochdruck-Injektor-Trenndüse (10) in einen Schneidbrenner vor allem eine doppelte Schneidsauerstoffzuführung aufweißt. Einmal fließt ein Hochdruckschneidsauerstoff (HDS O₂) in die Kernstrahldüse (11) direkt und zum andern ein Niederdruckschneidsauerstoff (NDS O₂) mit Werksnetzdruck in den Ringkanal (19) der Ringstrahlzufuhr (12). Der schnellere Sauerstoffstrahl aus der Kernstrahldüse (11) reißt, sich ausdehnend, den langsameren Sauerstoff aus der Ringstrahlzufuhr (12) im Injektorraum (13) mit, durch die Injektorwirkung entsteht auch ein beschleunigter Vorderbereich des Ringstrahls und ein leicht verzögerter Hinterbereich des Kernstrahls. Durch die Erzeugung des Ringstrahles (9) in der Mündung der Trenndüse (10) wird auch die Geschwindigkeit des aüßeren Bereiches des Ringstrahls (9) wesentlich erhöht.

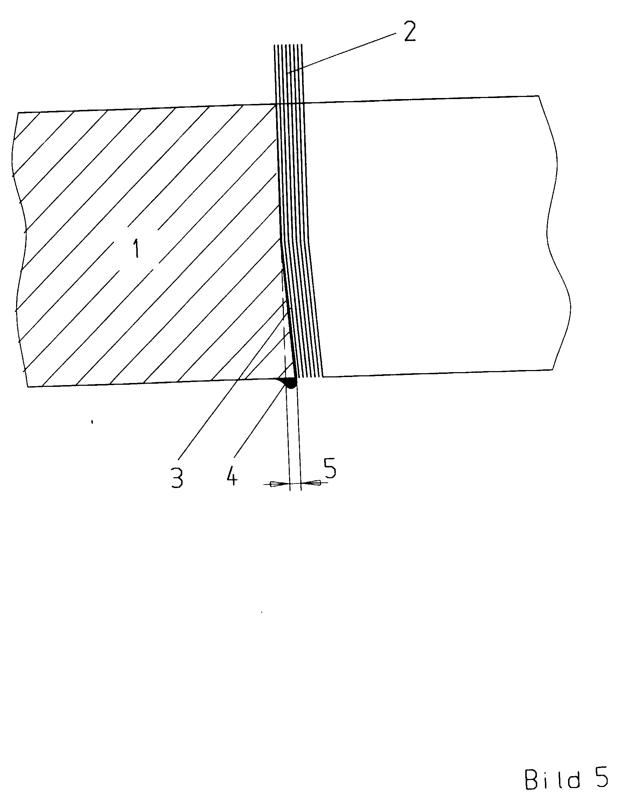

Damit kann nun beim Brennschneiden nach **Bild 5** mit einem Trennstrahl (2) gearbeitet werden, der außen erst mit einem schnelleren Ringstrahl (9) reagiert und die Schlacke abschiebt, aber zunehmend nach innen noch schneller mit höher werdender Energie nach außen expandierend die zunehmende Schlackeschicht (3) besser abschiebt bzw. wegbläst und eine bessere Reaktion in den tieferen Bereichen des Werkstücks (1) ermöglicht. Die Schlackeschicht (3) einer Momentaufnahme, **Bild 5**, wird dünner , der Riefennachlauf (5) wird geringer und der Brennbart (4) kleiner. Insgesamt wird die Schneidgeschwindigkeit höher.

Wie auch aus dem **Bild 4** erkennbar, wird zur Verbesserung des Kernstrahls (8) eine an sich bekannte plötzliche Verengung der Kernstrahldüse (11) mittels einer nahezu rechtwinkligen Querschnittsverringerung zur Erzeugung einer Stoßfläche vor dem engsten Querschnitt durch eine vorspringende Lippe als Abweiskonus (14) ersetzt, durch den nicht rechtzeitig in den schnellen Kernstrahl (7) eingeordnete Sauerstoffteile, außen mehr zur Umkehr gezwungen, weiter zurückströmen, um sich mit weniger Verwirbelung früher wieder in den Kernstrahl (7) einzufügen. Es kommt so zu einer günstigeren Einschnürungswirkung.

Während mit bekannten Hochleistungsdüsen und üblichen, ziemlich hohen Arbeitsdrücken von 10 - 12 bar an kaltem Stahl von 250 mm Dicke Schneidgeschwindigkeiten von 220 mm/min möglich waren, konnten mit den Hochdruck-Injektor-Trenndüsen (10), versorgt mit Sauerstoff innen von 32 bar und außen 10 bar, eine Schneidgeschwindigkeit von 310 mm/min erzielt werden. Die Zunahme des gesamten Sauerstoffverbrauchs bei diesen Versuchen lag etwa nur bei 30 %. Unberücksichtigt blieben die Energiekosten zur Druckerhöhung von 10 auf 32 bar für ca. 20 Nm³/h, wie auch die Amortisation der aufwendigen Düsen, Brenner und Versorgung.

### Literatur

DE 25 21 253 A1 Linde AG

### Legende

- 1: Werkstück
- 2: Schneidstrahl
- 3: Schlackeschicht
- 4: Schlackebart
- 5: Riefennachlauf
- 6: Vorderbereich (Ringstrahl)
- 7: Innen- oder Hinterbereich (Kernstrahl)
- 8: aufgeblähter Kernstrahl
- 9: verengter Ringstrahl
- 10: Hochdruck-Injektor-Trenndüse
- 11: Kernstrahldüse
- 12: Ringstrahlzufuhr
- 13: Injektorraum
- 14: Abweiskonus
- 15: Heizbohrungen
- 16: Sechskant
- 17: Gewinde
- 18: Dichtfläche
- 19: Ringkanal
- 20: Dosierungsbohrung
- HG: Heizgas
- H O₂: Heizsauerstoff
- NDS O₂: Niederdruckschneidsauerstoff
- HDS O₂: Hochdruckschneidsauerstoff

## Patentansprüche

1. Gerät zum Schnelltrennen von Stahl mit Sauerstoff in Stahlstranggießanlagen wobei mit einem konzentrischen Doppeltrennstrahl aus Sauerstoff geschnitten wird, dessen Kern aus Hochdruck- bzw. Hochgeschwindigkeitssauerstoff und dessen Ring aus Niederdruck- bzw. Niedriggeschwindigkeitssauerstoff besteht, die eine Strahleinheit mit unterschiedlichem Druch- bzw. Geschwindigkeitsprofil bilden, dadurch gekennzeichnet, daß zur Erzeugung des konzentrischen Doppeltrennstrahls aus Sauerstoff eine Hochdruck-Injektor-Trenndüse (10) eingesetzt wird, die eine Sauerstoff-Düsenbohrung mit Abweiskonus (14) für den Hochdruck-/Hochgeschwindigkeitsstrahlteil und einen sie umgebenden Ringspalt für den Niederdruck-/Niedriggeschwindigkeitsstrahl hat, die in eine gemeinsame Mündungsbohrung übergehen und ein Mitreißen der langsameren Strahlteile durch schnelle und eine Verminderung von Reibung in der Düse ermöglichen.

## Claims

1. Method, apparatus and arrangement for fast cutting of steel using oxygen in continuous steel casting plants, cutting being performed with a concentric double-separating jet of oxygen, whose core consists of high-pressure and/or high-speed oxygen and whose ring consists of low-pressure and/or low-speed oxygen, forming together a jet unit with different pressure and/or speed profiles defined by that a high-pressure-injector-separating nozzle (10) is used for producing the concentric double-separating jet of oxygen. The nozzle (10) is equipped with an oxygen nozzle bore with rejecting cone (14) for the high-pressure/high speed jet part and a surrounding ring passage for the low-pressure/low-speed jet, which merge into a joint outlet bore and therefore enable slower jet parts to be carried along by quicker ones and a reduction of friction in the nozzle.

## Revendications

1. Procédé, appareil et dispositif pour un oxycoupage plus rapide de l'acier dans les installations de coulée continue, la coupe étant réalisée par un double jet concentrique d'oxygène, dont le noyau est alimenté en oxygène à haute pression et grande vitesse et la bague externe par de l'oxygène à basse pression et vitesse réduite, le tout constituant une unité dont le profil radial des vitesses et pressions n'est pas constant, caractérisés en ce que la production du double jet concentrique d'oxygène de coupe est assurée par une buse-injecteur de coupe haute pression (10) qui possède d'une part un cône de déflexion (14) pour la partie du jet haute pression/haute vitesse et d'autre part un passsage annulaire pour la partie du jet à faible pression/faible vitesse, tous les deux débouchant dans une ouverture commune afin que la partie lente du jet soit accélérée au contact de la partie rapide et afin de rendre possible une réduction de friction dans la buse.
